# EUROPÄISCHE PATENTSCHRIFT

(11) **EP 0 814 251 B1**
(45) Veröffentlichungstag und Bekanntmachung des Hinweises auf die Patenterteilung: **25.09.2002**
(21) Anmeldenummer: 97107653.4
(22) Anmeldetag: 09.05.1997
(51) Int. Cl.: F02D 41/22

(54) **Sicherheitssystem für ein Kraftfahrzeug**
Safety system for a motor vehicle
Système de sécurité pour véhicule à moteur

(30) Priorität: 21.06.1996 DE 19624822
(43) Veröffentlichungstag der Anmeldung: 29.12.1997
(73) Patentinhaber: DaimlerChrysler AG, 70567 Stuttgart (DE)
(72) Erfinder: Wolf, Hans-Christoph, Dr., 70597 Stuttgart (DE); Schenk, Jürgen, 73095 Albershausen (DE)

(56) Entgegenhaltungen:
- US-A- 4 940 030
- US-A- 5 018 383
- US-A- 5 370 094
- PATENT ABSTRACTS OF JAPAN vol. 095, no. 008, 29. September 1995 & JP 07 119522 A (NISSAN MOTOR CO LTD), 9. Mai 1995

## Beschreibung

Die Erfindung betrifft ein Sicherheitssystem für ein Kraftfahrzeug mit Brennkraftmaschine.

Aus der DE 39 14 167 A1 ist ein Sicherheitssystem für eine Kraftfahrzeug-Brennkraftmaschine bekannt, bei dem das Ausgangsmoment eines Getriebes überwacht wird. Falls das festgestellte Drehmoment bei nicht-gedrücktem Fahrpedal einen vorgegebenen Minimalwert übersteigt, so wird der Betrieb der Brennkraftmaschine unterbrochen. Dieses System weist den Nachteil auf, daß es nur bei nicht-gedrücktem Fahrpedal eingreift. Andere Fehlfunktionen können hiermit nicht erkannt werden.

Außerdem sind Systeme bekannt, bei denen als Eingangsgröße für die Überwachung die Drosselklappenstellung verwendet werden. Diese Systeme weisen den Nachteil auf, daß zur Regelung der Brennkraftmaschine und zur Überwachung eine einzige Größe verwendet wird. Tritt nun bei dieser Erfassung ein Fehler auf, so arbeiten sowohl die Motorsteuerung als auch die Überwachungseinrichtung mit der falschen Größe. Ein weiteres Problem dieser Überwachungseinrichtung ergibt sich bei Brennkraftmaschinen mit dynamischer Momenteneinstellung, da hier vor allem in dynamischen Betriebszuständen keine direkte Beziehung zwischen Drosselklappenstellung und Motorlast besteht. Somit kann die Überwachung bei solchen Brennkraftmaschinen nicht auf der Basis der Drosselklappenstellung erfolgen.

Es ist die Aufgabe der Erfindung, ein Sicherheitssystem für ein Kraftfahrzeug mit einer Brennkraftmaschine zu schaffen, mit dem die Sicherheit des Kraftfahrzeugs in allen Betriebsbereichen gewährleistet wird und das auch bei Brennkraftmaschinen mit dynamischer Momenteneinstellung verwendbar ist.

Die Aufgabe wird erfindungsgemäß durch die Merkmale des Patentanspruchs 1 gelöst.

Das erfindungsgemäße Sicherheitssystem weist den Vorteil auf, daß für die Motorsteuerung und für die Überwachung unabhängige Eingangsgrößen verwendet werden. Fällt die Erfassung einer der beiden Größen aus, so kann entweder die Motorsteuerung oder die Überwachung weiterhin ordnungsgemäß arbeiten. Fällt die Motorsteuerung aus, so kann das Sicherheitssystem zumindest einen Notbetrieb oder das Außerbetriebsetzen der Brennkraftmaschine gewährleisten.

Ein weiterer Vorteil besteht darin, daß nicht nur ein einzelner Betriebsparameter der Brennkraftmaschine auf Plausibilität überprüft wird, sondern daß das Sicherheitssystem vielmehr auf physikalischer Ebene arbeitet. Die Fahrpedalstellung entspricht im Prinzip dem Wunsch des Fahrers, das Fahrzeug in einen vorgegebenen Zustand zu versetzen. Um den gewünschten Zustand zu erreichen, werden von der Motorsteuerung auf der Basis der Fahrpedalstellung Sollwerte für die Betriebsparameter der Brennkraftmaschine vorgegeben und entsprechend eingestellt. Gleichzeitig wird für das Sicherheitssystem ein Sollwert für die zu erwartende Reaktion des Fahrzeugs auf der Basis der Fahrpedalstellung ermittelt und mit der tatsächlichen Reaktion verglichen.

Wird das Sicherheitssystem bei einem Fahrzeug mit einem Traktionskontrollsystem eingesetzt, so kann die Reaktion des Fahrzeugs anhand zumindest einer Raddrehzahl erfaßt werden. Die Raddrehzahl n_{Rad} muß hier nicht separat erfaßt zu werden, sondern kann vom Traktionskontrollsystem an das Sicherheitssystem übergeben werden. Somit ist für das Sicherheitssystem kein zusätzlicher Bauaufwand notwendig.

Weitere Vorteile und Ausgestaltungen gehen aus den Unteransprüchen und der Beschreibung hervor. Die Erfindung ist nachstehend anhand einer Zeichnung, die den prinzipiellen Aufbau eines erfindungsgemäßen Sicherheitssystems zeigt, näher beschrieben.

Als Eingangsgrößen werden die Stellung FP eines Fahrpedals 1, zumindest ein den Betriebszustand der Brennkraftmaschine charakterisierender Betriebsparameter - beispielsweise die Motorlast Lastᵢₛₜ - und zumindest eine den Fahrzeugvortrieb charakterisierende Größe - beispielsweise eine Raddrehzahl n_{Rad} - ermittelt und über Datenleitungen einer Auswertevorrichtung 4 zur Verfügung gestellt. Gemäß Ausführungsbeispiel erfolgt die Lasterfassung indirekt über eine Messung des aktuellen Luftmassenstromes ṁᵢₛₜ in der Ansaugleitung 2 der nicht näher gezeigten Brennkraftmaschine. Der aktuelle Luftmassenstromes ṁᵢₛₜ kann beispielsweise mit Hilfe einer Drosselklappe 5 eingestellt und mit Hilfe eines Hitzdraht-Luftmassenmesser 6 bestimmt werden.

Die Auswerte-Vorrichtung 4 wird im folgenden als Motorsteuergerät bezeichnet. Im Motorsteuergerät 4 wird nun in Block 7 aus der Fahrpedalstellung FP eine Fahrzeugvortriebs-Anforderung - beispielsweise ein Fahrerwunschmoment M_{soll-FP} - und daraus anschließend in Block 8 ein Sollwert für den den Betriebszustand der Brennkraftmaschine charakterisierenden Betriebsparameter - beispielsweise ein Last-Sollwert Lastₛₒₗₗ - ermittelt. Gleichzeitig wird in Block 9 aus dem aktuellen Luftmassenstrom ṁᵢₛₜ ein Last-Istwert Lastᵢₛₜ ermittelt, in Block 10 mit dem Last-Sollwert Lastₛₒₗₗ verglichen und ein Differenzwert Δ_{Last} bestimmt. Aus diesem Differenzwert Δ_{Last} wird dann schließlich in Block 11 ein Drosselklappen-Sollwert αₛₒₗₗ ermittelt und die Drosselklappe 5 mit Hilfe einer nicht gezeigten Drosselklappenverstellung auf diesen Sollwert αₛₒₗₗ eingestellt.

Die bisher beschriebenen Schritte dienen zur Regelung der Leistung der Brennkraftmaschine beziehungsweise des Fahrzeugs. Hierzu werden dem Motorsteuergerät 4 weitere Betriebsparameter, wie beispielsweise Motordrehzahl oder Motortemperatur, zur Verfügung gestellt. Außerdem werden durch das Motorsteuergerät 4 neben der Drosselklappenstellung auch noch weitere Betriebsparameter, beispielsweise Zündzeitpunkt (Block 15) oder Kraftstoffmenge (Block 16), beeinflußt. Solche Verfahren sind aus dem Stand der Technik, beispielsweise aus der DE 43 15 885 C1 bekannt und werden daher hier nicht weiter erläutert.

Bei Betriebsstörungen der Brennkraftmaschine, beispielsweise bei der Erfassung des Luftmassenstromes mᵢₛₜ oder bei der Einstellung der Drosselklappenposition αₛₒₗₗ, kann es zu Beeinträchtigungen des Betriebs oder gar zu einer erheblichen Beeinflussung der Betriebssicherheit des Fahrzeugs kommen. Insbesondere kann es vorkommen, daß sich die Drosselklappe 5 in vollständig geöffneter Position verklemmt. Daher ist es erforderlich, ein Sicherheitssystem vorzusehen, mit dem ein gefahrloser Betrieb des Fahrzeugs trotz Betriebsstörung ermöglicht oder zumindest eine Abschaltung der Brennkraftmaschine gewährleistet wird.

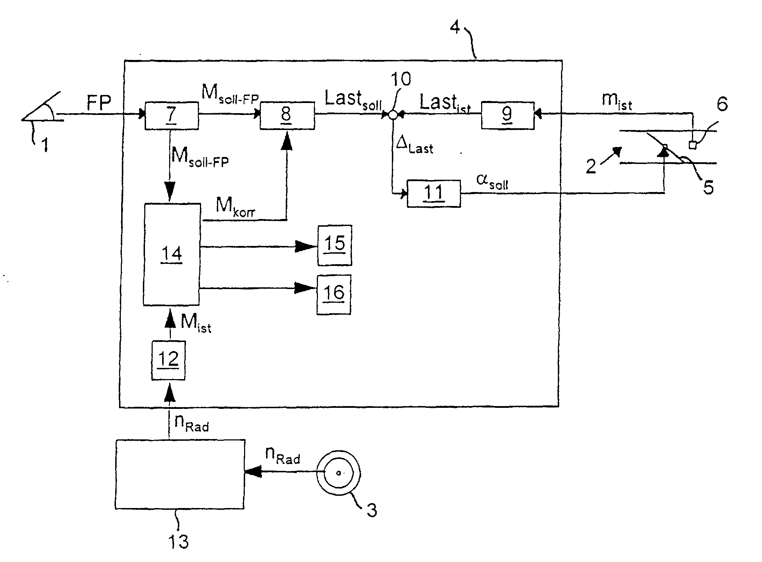

Gemäß dem in der Zeichnung dargestellten Ausführungsbeispiel ist hierzu an mindestens einem Fahrzeugrad 3 ein nicht gezeigter Sensor zur Erfassung einer Raddrehzahl n_{Rad} vorgesehen. Diese Raddrehzahl n_{Rad} wird über eine Datenleitung an das Motorsteuergerät 4 übergeben. Aus dem Drehzahlsignal n_{Rad} wird in Block 12 durch zeitliche Ableitung und anschließende Multiplikation mit der Fahrzeugmasse der Fahrzeugvortriebs-Istwert in Form des Ausgangsmomentes Mᵢₛₜ - ermittelt. Im Normalbetrieb der Brennkraftmaschine sollten die beiden Eingangsgrößen M_{soll-FP}, Mᵢₛₜ, abgesehen von kleineren Schwankungen, im wesentlichen übereinstimmen. Lediglich beim Auftreten einer Fehlfunktion in der Signalerfassung, -übertragung oder -verarbeitung kann es hier zu Abweichungen kommen. Der Differenzwert ΔM wird daher in Block 14 laufend mit einem vorgegebenen Schwellwert M_{schwell} verglichen. Wird hierbei festgestellt, daß der Differenzwert ΔM über einen vorgegebenen Zeitraum den Schwellwert M_{schwell} übersteigt, so wird ein Fehler erkannt.

Für den Fall, daß ein Fehler erkannt wird, können unterschiedliche Maßnahmen vorgesehen werden. Im einfachsten Fall wird ein Fehlersignal erzeugt und dem Fahrer angezeigt und/oder in einem Speicher zur späteren Auswertung abgelegt. Allein aufgrund dieser Maßnahme kann die Betriebssicherheit der Brennkraftmaschine nicht gewährleistet werden. Zusätzlich kann es notwendig sein, in die Motorsteuerung einzugreifen. Eine Möglichkeit besteht darin, in Block 14 auf der Basis des Differenzwertes ΔM ein korrigiertes, höherpriores Soll-Drehmoment Mₖₒᵣᵣ zu ermitteln und an Block 7 zu übergeben.

Eine weitere Möglichkeit, auf das Erkennen eines Fehlerzustandes zu reagieren, besteht darin, das Ausgangsmoment Mᵢₛₜ durch einen Zündungseingriff, beispielsweise eine vorübergehende Früh- oder Spätverstellung des Zündzeitpunktes, zu reduzieren. Hierzu wird in Block 14 ein entsprechendes Fehlersignal erzeugt und über eine Datenleitung an die Zündungseinstellung (Block 15) übergeben. Führt auch diese Maßnahme nicht dazu, daß das Ausgangsmoment Mᵢₛₜ auf einen Wert Mᵢₛₜ <= M_{soll-FP} beschränkt wird, so muß die Brennkraftmaschine gegebenenfalls durch eine Kraftstoffabschaltung außer Betrieb gesetzt werden. Hierzu wird wiederum in Block 14 ein entsprechendes Fehlersignal erzeugt und Kraftstoffdosierung (Block 16) übergeben

Block 14 stellt somit das eigentliche Modul zur Überwachung der Brennkraftmaschine dar. Hier werden die Eingangsgrößen Fahrerwunschmoment M_{soll-FP} und Ausgangsmoment Mᵢₛₜ verglichen und bei einer Abweichung entsprechende Signale erzeugt, um durch eine Reduzierung der Lastvorgabe (Block 8), einen Zündungseingriff (Block 15) und/oder einer Kraftstoffabschaltung (16) ein überhöhtes Ausgangsmoment Mᵢₛₜ zu verhindern.

Der Austausch von Daten beziehungsweise Meßsignalen zwischen den einzelnen Sensoren und Auswertevorrichtungen kann über beliebige Datenverbindungen realisiert werden. Im einfachsten Fall werden alle Geräte mit einfachen elektrischen Leitungen verbunden.

Falls vorhanden kann der Datenaustausch jedoch auch über einen im Fahrzeug vorgesehenen Datenbus erfolgen. Dies hat den Vorteil, daß alle Informationen an allen angeschlossenen Geräten zur Verfügung stehen. Für den Fall, daß die Auswertevorrichtung 4 oder der Datenbus ausfällt, weißt die Drosselklappenverstellung im allgemeinen eine mechanische Vorrichtung, beispielsweise in Form einer Feder, auf, die die Drosselklappe 5 in Schließstellung überführt, so daß die Brennkraftmaschine im Leerlauf betrieben wird. Selbstverständlich kann für diesen Fall jedoch auch vorgesehen werden, daß die Brennkraftmaschine durch eine Abschaltung der Kraftstoffzufuhr stillgesetzt wird.

Das beschriebene Sicherheitssystem weist den Vorteil auf, daß zur Regelung beziehungsweise zur Überwachung der Brennkraftmaschine unabhängige Größen verwendet werden. Zur Regelung wird eine beliebige, die Motorlast Lastᵢₛₜ charakterisierende Betriebsgröße erfaßt. Zusätzlich zum oder anstelle vom momentanen Luftmassenstrom ṁᵢₛₜ kann hier auch der Saugrohrdruck und/oder die Drosselklappenstellung verwendet werden. Zur Überwachung wird zusätzlich das Ausgangsmoment Mᵢₛₜ des Fahrzeugs auf der Basis einer Raddrehzahl n_{Rad} ermittelt. Fällt nun die Erfassung des Luftmassenstromes ṁᵢₛₜ aus, so wird die Motorregelung fehlerhaft arbeiten. Das Sicherheitssystem arbeitet jedoch unabhängig von dieser Eingangsgröße und kann daher die Brennkraftmaschine, wie bereits oben beschrieben, in einen Notbetrieb umschalten oder stillsetzen. Fällt auf der anderen Seite die Erfassung der Raddrehzahl n_{Rad} aus, so fällt zwar das Sicherheitssystem aus, die Motorsteuerung kann jedoch auf der Basis des Luftmassenstromes ṁᵢₛₜ weiterhin ordnungsgemäß arbeiten. Für den unwahrscheinlichen Fall, daß die Erfassung sowohl des Luftmassenstromes ṁᵢₛₜ als auch der Raddrehzahl n_{Rad} ausfällt, ist ein sicherer Betrieb der Brennkraftmaschine jedoch nicht mehr möglich, da sowohl die Motorsteuerung als auch das Sicherheitssystem ausfallen. In diesem Fall muß die Brennkraftmaschine stillgesetzt werden.

Ein weiterer wesentlicher Vorteil besteht darin, daß das beschriebene Sicherheitssystem auch bei Fahrzeugen mit einer sogenannten dynamischen Momenteneinstellung verwendet werden kann. Da bei solchen Motorsteuerungen insbesondere in dynamischen Betriebszuständen keine direkte Kopplung zwischen Drosselklappenstellung αᵢₛₜ und Motorlast Lastᵢₛₜ mehr besteht, ist es nicht mehr möglich, die Überwachung auf der Basis des Drosselklappenwinkels αᵢₛₜ auszuführen. Weist die Motorsteuerung zusätzlich eine Momentenschnittstelle auf, über die zusätzliche Steuerkomponenten auf das Motorsollmoment Mₛₒₗₗ einwirken, so kann mit dem Sicherheitssystem auch die Funktion dieser Zusatzsystem zumindest teilweise überwacht werden. Führt der Eingriff eines solchen Zusatzsystems zu einer Verringerung des Sollmomentes Mₛₒₗₗ, so ist dies für die Betriebssicherheit unerheblich. Eine unzulässige Erhöhung des Sollmomentes Mₛₒₗₗ durch ein solches Zusatzsystem wird jedoch durch das Sicherheitssystem erkannt.

Gemäß Ausführungsbeispiel wird das Fahrerwunschmoment Mₛₒₗₗ auf der Basis der Fahrpedalstellung FP ermittelt. Es ist jedoch auch möglich, hierzu andere geeignete Eingangsgrößen, beispielsweise das Ausgangssignal einer automatischen Geschwindigkeitsregelung, zu verwenden. Auch für die Erfassung der Raddrehzahl n_{Rad} sind neben der im Ausführungsbeispiel beschriebenen Erfassung einer einzelnen Raddrehzahl noch weitere Möglichkeiten gegeben. Beispielsweise können die Drehzahlen mehrerer oder aller Räder 7 gemessen und daraus in beliebiger Art und Weise eine effektive Raddrehzahl n_{Rad} ermittelt werden. Prinzipiell kann das Ausgangsmoment Mᵢₛₜ an einer beliebigen Stelle des Antriebstranges ermittelt werden. Lediglich die Definition der Momentenschnittstelle muß an die gewählte Stelle im Triebstrang angepaßt werden.

Vorteilhaft für das Sicherheitssystem ist es, wenn in dem Fahrzeug zusätzlich ein Traktionskontrollsystem vorgesehen ist. Hierbei kann es sich um ein einfaches System, beispielsweise in Form eines Antiblockiersystems, oder auch um ein aufwendigeres System, wie Antischlupf- oder Fahrdynamikregelung, handeln. Bei solchen Traktionskontrollsystemen werden die Drehzahlen einzelner oder aller Räder 7 erfaßt und ausgewertet. Daher ist es möglich, die vom Traktionskontrollsystem 13 ermittelte Raddrehzahl n_{Rad} an die Auswerteeinrichtung 4 zu übergeben. Für das Sicherheitssystem ist daher kein zusätzlicher Bauaufwand nötig, da alle Sensoren und Auswertevorrichtungen bereits für andere Aufgaben benötigt werden. Gemäß Ausführungsbeispiel ist die Motorsteuerung und das Sicherheitssystem in einer gemeinsamen Auswertevorrichtung 4 zusammengefaßt. Es ist jedoch auch möglich, hierfür separate Vorrichtungen vorzusehen. Auf der anderen Seite ist es auch möglich, weitere Funktionen, wie beispielsweise das Traktionskontrollsystem in die einzige Auswertevorrichtung 4 zu integrieren.

Das anhand der Zeichnung beschriebene Sicherheitssystem stellt nur ein mögliches Ausführungsbeispiel dar. Daher soll sich der Schutzbereich nicht auf das dargestellte Beispiel beschränken. Vielmehr kann der erfindungsgemäße Gedanke auf nahezu alle Motorsteuerungen angewendet werden. Als charakterisierende Größe für den Betriebszustand der Brennkraftmaschine kommt hierbei nicht nur die Motorlast Lastᵢₛₜ in Frage. Der Betriebszustand kann vielmehr auch charakterisiert werden durch den Wirkungsgrad - beispielsweise als Funktion von Zündzeitpunkt, Lambda oder Kraftstoffabschaltung - , die Anzahl der Verbraucher - beispielsweise Klimaanlage oder Lichtmaschine -, oder den Zustandsparametern für die Funktionen Zylinderabschaltung, sequentielle Kraftstoffabschaltung, Gang, Gangwechsel, oder Kraftübertragung. Selbstverständlich kann auch eine Kombination mehrerer dieser oder weiterer Größen verwendet werden. Prinzipiell kommen hier alle Größen, die den Zustand der Brennkraftmaschine und damit direkt oder indirekt den Vortrieb des Fahrzeuges beeinflussen, als Eingangsgröße in Frage.

Als Fahrzeugvortriebs-Anforderung kommen neben dem Sollmoment auch Sollbeschleunigung oder Solldrehzahl, jeweils gemessen an der Motorwelle, Getriebewelle oder direkt am Fahrzeugrad, in Frage. Weiterhin kann auch die Kraftstoffmengenvorgabe, die Drosselklappenwinkelanforderung oder Sollwerte für den Luftmassenstrom oder die Last verwendet werden. Als Meßgröße für den Fahrzeugvortrieb kann neben der Raddrehzahl auch die Drehzahl, die Beschleunigung oder das Moment an einer beliebigen Stelle im Antriebsstrang erfaßt werden. Zusätzlich kommen auch der Fahrzeuggier-, -nick- oder -wankwinkel in Frage.

Entscheidend ist lediglich das Prinzip, auf der Basis des Fahrerwunsches zwei Sollwerte zu ermitteln, wobei ein Sollwert dem gewünschten Fahrzeugvortrieb entspricht und der andere Sollwert eine Steuer- oder Regelgröße der Brennkraftmaschine zur Einstellung des gewünschten Fahrzeugvortriebs betrifft. Außerdem werden zwei unabhängige Meßwerte erfaßt, aus denen jeweils ein dem entsprechenden Sollwert zugeordneter Istwert ermittelt wird. Schließlich sind zwei unabhängige Funktionen vorgesehen, wobei die eine zur Steuerung oder Regelung der Brennkraftmaschine, sowie zur Ermittlung des Soll- und Istwertes für den Fahrzeugvortrieb dient, und die zweite den Betrieb der Brennkraftmaschine anhand der vom ersten Steuergerät bereitgestellten Soll- und Istwerte für den Fahrzeugvortrieb überwacht und gegebenenfalls Steuerbefehle an die erste Funktion zur Korrektur einer Fehlfunktion oder zum Außerbetriebsetzen der Brennkraftmaschine sendet. Diese beiden Funktionen können gemeinsam im Motorsteuergerät 4 integriert werden, es können jedoch auch zwei getrennte Vorrichtungen vorgesehen werden. Beispielsweise kann die Überwachungsfunktion auch in das Traktionskontrollsystem 13 integriert werden.

## Patentansprüche

1. Sicherheitssystem für ein Kraftfahrzeug mit Brennkraftmaschine mit Vorrichtungen zur Ermittlung
- der Fahrpedalstellung (FP),
- zumindest eines den Betriebszustand der Brennkraftmaschine charakterisierenden Betriebsparameters (Lastᵢₛₜ),
- zumindest eines den Fahrzeugvortrieb charakterisierenden Größe (nᵢₛₜ),
- einer Fahrzeugvortriebs-Anforderung (M_{soll-FP}) und eines Sollwertes für den den Betriebszustand der Brennkraftmaschine charakterisierenden Betriebsparameter (Lastₛₒₗₗ) auf der Basis der Fahrpedalstellung (FP),
und mit Vorrichtungen
- zur Einstellung des den Betriebszustand der Brennkraftmaschine charakterisierenden Betriebsparameter (Lastᵢₛₜ) auf den ermittelten Sollwert (Lastₛₒₗₗ), und
- zum laufenden Vergleich der Fahrzeugvortriebswerte (Mᵢₛₜ, M_{soll-FP}), wobei bei einer Abweichung des Istwertes (Mᵢₛₜ) vom Sollwert (M_{soll-FP}) ein Fehler erkannt wird.

2. Sicherheitssystem nach Anspruch 1,
**dadurch gekennzeichnet,**
**daß** eine Abweichung dann erkannt wird, wenn die Differenz ΔM = Mᵢₛₜ - M_{soll-FP}) zwischen den Fahrzeugvortriebswerten (Mᵢₛₜ, M_{soll-FP}) über einen vorgegebenen Zeitraum einen vorgegebenen Schwellwert (M_{schwell}) übersteigt.

3. Sicherheitssystem nach Anspruch 1,
**dadurch gekennzeichnet, daß** dann, wenn ein Fehler erkannt wird, die Einstellung des den Betriebszustand der Brennkraftmaschine charakterisierenden Betriebsparameteres (Lastᵢₛₜ) auf der Basis des Differenzwertes (ΔM) erfolgt.

4. Sicherheitssystem nach Anspruch 1,
**dadurch gekennzeichnet, daß** dann, wenn ein Fehler erkannt wird, ein Signal zur Reduzierung des Fahrzeugvortriebs-Istwertes (Mᵢₛₜ) an die Zündverstellung (15) übergeben wird.

5. Sicherheitssystem nach Anspruch 4,
**dadurch gekennzeichnet, daß** dann, wenn trotz Zündungseingriff der Fahrzeugvortriebs-Istwert (Mᵢₛₜ) die Fahrzeugvortriebs-Anforderung (M_{soil-FP}) übersteigt, ein Signal zur Kraftstoffabschaltung an die Kraftstoffdosierung (16) übergeben wird.

6. Sicherheitssystem nach Anspruch 1,
**dadurch gekennzeichnet, daß** dann, wenn ein Fehler erkannt wird, ein Fehlersignal erzeugt und dem Fahrer angezeigt und/oder in einem Speicher abgelegt wird.

7. Sicherheitssystem nach Anspruch 1,
**dadurch gekennzeichnet,**
- **daß** neben der Fahrpedalstellung (FP) die Motorlast (Lastᵢₛₜ) und die Drehzahl (n_{Rad}) an zumindest einem Fahrzeugrad (3) erfaßt wird,
- **daß** ein Last-Sollwert (Lastₛₒₗₗ) und ein Fahrerwunschmoment (M_{soll-FP}) auf der Basis der Fahrpedalstellung (FP), und ein Ausgangsmoment (Mᵢₛₜ) auf der Basis der zumindest einen Raddrehzahl (n_{Rad}) ermittelt wird und der Last-Istwert (Lastᵢₛₜ) durch Beeinflussung eines die Motorlast (Lastᵢₛₜ) beeinflussenden Betriebsparameters (αᵢₛₜ) auf den Last-Sollwert (Lastₛₒₗₗ) eingestellt wird, und
- **daß** laufend die Ausgangsmomente (Mᵢₛₜ, M_{soll-FP}) verglichen und bei einer Abweichung des Istmomentes (Mᵢₛₜ) vom Fahrerwunschmoment (M_{soll-FP}) ein Fehler erkannt wird.

8. Sicherheitssystem nach Anspruch 7,
**dadurch gekennzeichnet,**
**daß** zusätzlich ein Traktionskontrollsystem vorgesehen ist und daß die Raddrehzahl (n_{Rad}) vom Traktionskontrollsystem (13) erfaßt und an die Auswertevorrichtung (4) übergeben wird.

## Claims

1. A safety system for a motor vehicle with an internal combustion engine with devices for determining:
- the accelerator pedal position (AP),
- at least one operating parameter (load_{act}) **characterising** the operating status of the internal combustion engine,
- at least one variable **characterising** vehicle propulsion (n_{act}),
- a vehicle propulsion requirement (M_{ref-AP}) and a reference value for the operating parameter (load_{ref}) **characterising** the operating status of the internal combustion engine on the basis of the position of the accelerator pedal (AP),
and with devices:
- for setting the operating parameter (load_{act}) **characterising** the operating status of the internal combustion engine to the determined reference value (load_{ref}), and
- for making a continuous comparison of the vehicle propulsion values ((M_{act}), (M_{ref-AP})), an error being identified in the event of a discrepancy between the actual value (M_{act}) and the reference value (M_{ref-AP}).

2. A safety system in accordance with claim 1,
**characterised in that**
a discrepancy is identified if the difference (ΔM = M_{act} - M_{ref-AP}) between the vehicle propulsion values (M_{act}, M_{ref-AP}) exceeds a predetermined threshold value (M_{threshold}) over a predetermined period.

3. A safety system in accordance with claim 1,
**characterised in that**
when an error is identified, the operating parameter (load_{act}) **characterising** the operating status of the internal combustion engine is set on the basis of the differential value (ΔM).

4. A safety system in accordance with claim 1,
**characterised in that**
when an error is identified, a signal to reduce the actual vehicle propulsion value (M_{act}) is transmitted to the ignition timing (15).

5. A safety system in accordance with claim 4,
**characterised in that**
if the actual vehicle propulsion value (M_{act}) exceeds the vehicle propulsion requirement (M_{ref-AP}) despite intervention in the ignition system, a signal to cut off the fuel supply is transmitted to the fuel metering system (16).

6. A safety system in accordance with claim 1,
**characterised in that**
when an error is identified, an error signal is generated and displayed to the driver and/or stored in a memory.

7. A safety system in accordance with claim 1,
**characterised in that**
- in addition to the position of the accelerator pedal (AP) the engine load (load_{act}) and the speed (n_{wheel}) at least one vehicle wheel (3) are captured,
- a load reference value (load_{ref}) and a driver-actuated torque (M_{ref-AP}) are determined on the basis of the accelerator pedal position (AP) and an output torque (M_{act}) is determined on the basis of at least one wheel speed (n_{wheel}) and the actual load value (load_{act}) is adjusted to the reference load value (load_{ref}) by influencing an operating parameter (α_{act}) which influences engine load (load_{act}), and
- the output torques (M_{act}, M_{ref-AP}) are continuously compared and in the event of a discrepancy between actual torque (M_{act}) and driver-actuated torque (M_{ref-AP}), an error is identified.

8. A safety system in accordance with claim 7,
**characterised in that**
in addition a traction control system is provided and that the wheel speed (n_{wheel}) is captured by the traction control system (13) and transmitted to the evaluating device (4).

## Revendications

1. Système de sécurité pour un véhicule automobile comportant un moteur à combustion interne, possédant des dispositifs pour déterminer
- le réglage (FP) de la pédale d'accélérateur,
- au moins un paramètre de fonctionnement (charge_{réelle}) caractérisant l'état de fonctionnement de la machine du moteur à combustion interne,
- au moins une grandeur (n_{réelle}) caractérisant l'avance du véhicule,
- une demande (M_{consigne-FP}) d'avance du véhicule et une valeur de consigne pour le paramètre de fonctionnement (charge_{consigne}) caractérisant l'état de fonctionnement du moteur à combustion interne, sur la base du réglage (FP) de la pédale d'accélérateur,
- et comportant des dispositifs
- pour régler le paramètre de fonctionnement (charge_{réelle}) caractérisant l'état de fonctionnement du moteur à combustion interne sur la valeur de consigne déterminée (charge_{consigne}),
- pour comparer en permanence les valeurs (M_{réeller}, M_{consigne-FP}) d'avance du véhicule, une erreur étant identifiée dans le cas d'un écart entre la valeur réelle (M_{réelle}) et la valeur de consigne (M_{consigne-FP}).

2. Système de sécurité selon la revendication 1, **caractérisé en ce qu'**un écart est identifié lorsque la différence (ΔM = M_{réelle} - M_{consigne-FP}) entre les valeurs d'avance du véhicule (M_{réelle}, M_{consigne-FP}) dépasse pendant un intervalle de temps prédéterminé une valeur de seuil prédéterminée Mₛₑᵤᵢₗ).

3. Système de sécurité selon la revendication 1, **caractérisé en ce que**, lorsqu'une erreur est identifiée, le réglage du paramètre de fonctionnement (charge_{réelle}), qui **caractérise** le réglage du paramètre de fonctionnement (charge_{réelle}), s'effectue sur la base de la valeur de différence (ΔM).

4. Système de sécurité selon la revendication 1, **caractérisé en ce qu'**une erreur est identifiée, un signal pour la réduction de valeur réelle (M_{réelle}) de la valeur réelle (M_{réelle}) de l'avance du véhicule est transférée à l'unité (15) de réglage d'allumage.

5. Système de sécurité selon la revendication 4, **caractérisé en ce que**, lorsqu'en dépit d'une intervention sur l'allumage la valeur réelle d'avance du véhicule (M_{réelle}) dépasse la demande (M_{consigne-FP}) d'avance du véhicule, un signal est transmis pour arrêter un signal d'interruption d'envoi de carburant est transmis au dispositif (16) de dosage du carburant.

6. Système de sécurité selon la revendication 1, **caractérisé en ce que** lorsqu'une erreur est identifiée, un signal d'erreur est produit et est affiché au conducteur et/ou est mémorisé dans une mémoire.

7. Système de sécurité selon la revendication 1, **caractérisé en ce**
- **qu'**en dehors de la position (FP) de la pédale d'accélérateur, la charge du moteur (charge_{réelle}) et la vitesse de rotation (nᵣₒᵤₑ) est détectée au niveau d'au moins une roue (3) du véhicule,
- **qu'**une valeur de consigne de charge (charge_{consigne}) et un couple (M_{consigne-FP}) souhaité par le conducteur sont déterminés sur la base du réglage (FP) de la pédale d'accélérateur et un couple de sortie (M_{réelle}) est déterminé sur la base de la au moins une vitesse de rotation de roue (nᵣₒᵤₑ) et la valeur réelle de charge (charge_{réelle}) est réglée par influence appliquée à un paramètre de fonctionnement (α_{réelle}), qui influe sur la charge (charge_{réelle}) du moteur, sur la valeur de consigne de la charge (charge_{consigne}), et
- **qu'**en permanence les couples de sortie (M_{réelle}, M_{consigne-FP}) sont comparés et qu'une erreur est identifiée dans le cas d'un écart entre le couple réel (M_{réel}) et le couple (M_{consigne-FP}) désiré par le conducteur.

8. Système de sécurité selon la revendication 7, **caractérisé en ce qu'**il est prévu en supplément un système de contrôle de traction et que la vitesse de rotation de roue (nᵣₒᵤₑ) est détectée par le système (13) de contrôle de traction et est transmise au dispositif d'évaluation (4).
